(19) Europäisches Patentamt
European Patent Office
Office européen des brevets

(11) **EP 2 161 245 B1**

(12) **EUROPEAN PATENT SPECIFICATION**

(45) Date of publication and mention
of the grant of the patent:
**03.12.2014 Bulletin 2014/49**

(51) Int Cl.:
***C03C 3/066*** *(2006.01)*    ***C03C 3/068*** *(2006.01)*

(21) Application number: **09009519.1**

(22) Date of filing: **22.07.2009**

(54) **Bismuth borate optical glass**

Optisches Bismutborat-Glas

Verre optique à base de bismuth et de bore

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **03.09.2008 JP 2008225929**

(43) Date of publication of application:
**10.03.2010 Bulletin 2010/10**

(73) Proprietor: **FUJIFILM Corporation
Tokyo (JP)**

(72) Inventor: **Saito, Motoaki
Saitama-shi,
Saitama (JP)**

(74) Representative: **Klunker . Schmitt-Nilson . Hirsch
Patentanwälte
Destouchesstraße 68
80796 München (DE)**

(56) References cited:
| | |
|---|---|
| **CN-A- 101 136 261** | **CN-A- 101 376 561** |
| **CN-A- 101 407 374** | **JP-A- 2002 348 152** |
| **JP-A- 2004 284 934** | **JP-A- 2007 099 610** |
| **JP-A- 2007 246 355** | **JP-A- 2008 001 531** |
| **US-A1- 2004 169 166** | **US-A1- 2008 096 752** |

• **CAROLINE JACQ ET AL: "Development of low-firing lead-free thick-film materials on steel alloys for piezoresistive sensor applications" MICROELECTRONICS AND PACKAGING CONFERENCE, 2009. EMPC 2009. EUROPEAN, IEEE, PISCATAWAY, NJ, USA, 15 June 2009 (2009-06-15), pages 1-6, XP031534285 ISBN: 978-1-4244-4722-0**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to optical glass that is suitable for high-precision press molding at a relatively low temperature.

2. Description of the Related Art

In recent years, digital still cameras or mobile phones with cameras that use an imaging device, such as a CCD (charge coupled device) or a CMOS (complementary metal oxide semiconductor), to capture image information have been rapidly spreading. Particularly, in recent years, an imaging device having a large number of pixels has been developed in order to improve image quality. Therefore, there is demand for an imaging lens with a high optical performance. In addition, there is an increasing demand for a small imaging lens.

In order to meet the demands, in many cases, a glass molded lens that is press-molded by a mold with high-precision dimensions is used as the imaging lens. The press molding, as compared to a polishing method, makes it possible to easily and effectively manufacture an optical lens having an aspheric surface or a very small optical lens.

However, press molding is performed at a high temperature equal to or higher than the deformation temperature of optical glass which is the raw material. Therefore, a mold needs to have high durability since it receives a large physical load, such as heat or stress. As the deformation temperature of the optical glass is increased, the physical load applied to the mold increases. Therefore, it is necessary to keep the deformation temperature of the optical glass as low as possible in order to increase the life span of the mold.

As the size of the imaging lens is reduced and the angle of view is increased, there is strong demand for increasing the refractive index of optical glass.

In order to meet the demand, optical glass has been developed (for example, see JP-A-2006-151758, JP-A-2007-099610 and JP-A-2007-70156) that has a high refractive index and a relatively low deformation temperature (and a glass transition temperature).

However, in recent years, the size of imaging lenses has been significantly reduced and the performance thereof has been significantly improved. Therefore, there is demand for optical glass that has a high refractive index and is easy to manufacture.

SUMMARY OF THE INVENTION

The invention has been made in order to solve the above-mentioned problems, and an object of the invention is to provide a lens formed from an optical glass having a high refractive index and high moldability.

According to an aspect of the invention, optical glass for forming the lens consists of $Bi_2O_3$, $B_2O_3$, $SiO_2$, $Al_2O_3$, ZnO in amounts specified below, and optionally at least one of BaO, $La_2O_3$, $TiO_2$, and $Sb_2O_3$ and satisfies the following Conditional expressions 1 and 2:

$$X+Y \geq 75 \ \text{......} \ (1),$$

and

$$2.5 < X/Y < 13 \ \text{......} \ (2)$$

where X indicates the content (wt%) of $Bi_2O_3$ and Y indicates the content (wt%) of $B_2O_3$.

According to the above-mentioned aspect of the invention, the optical glass consists of the above-mentioned components and satisfies Conditional expressions 1 and 2. Therefore, it is possible to ensure a high refractive index and obtain performance suitable for press molding (characteristics of preventing, for example, cloudiness when press molding is performed). Specifically, it is possible to obtain a refractive index of more than 1.9 with respect to the d-line and a low glass transition temperature of less than 450°C. Since the optical glass includes $SiO_2$ and $Al_2O_3$, it is possible to improve devitrification resistance in a molding temperature range from the deformation temperature At of glass to a temperature that is about 50°C higher than the deformation temperature At.

In the optical glass of the lens according to the above-mentioned aspect, the content of $Bi_2O_3$ is equal to or greater than 60 wt% and equal to or less than 90 wt%. The content of $B_2O_3$ is equal to or greater than 5 wt% and equal to or less than 30 wt%. The content of $SiO_2$ is greater than 0 and equal to or less than 5 wt%. The content of $Al_2O_3$ is equal to or greater than 0.5 wt% and equal to or less than 5 wt%. The content of ZnO is equal or greater than 0.5 wt% and equal to or less than 3 wt%.

The optical glass according to the above-mentioned aspect may include at least one of BaO, $La_2O_3$, $TiO_2$, and $Sb_2O_3$. In this case, the content of BaO may be equal to or greater than 0 wt% and equal to or less than 15 wt%. The content of $La_2O_3$ may be equal to or greater than 0 wt% and equal to or less than 7 wt%. The content of $TiO_2$ may be equal to or greater than 0 wt% and equal to or less than 5 wt%. The content of $Sb_2O_3$ may be equal to or greater than 0.03 wt% and equal to or less than 2 wt%.

The optical glass of the lens according to the above-mentioned aspect of the invention does not include germanium oxide ($GeO_2$) which is expensive, but includes $Bi_2O_3$ and $B_2O_3$ as the main components in a good balance so as to satisfy Conditional expressions 1 and 2. In addition, the optical glass includes $SiO_2$, $Al_2O_3$ and ZnO as the sub-components. Therefore, it is possible to increase the refractive index and reduce the deformation temperature (and a glass transition temperature). As a result, it is possible to prevent devitrification during press molding. According to this structure, the optical glass can be formed at a relatively low temperature. Therefore, this structure is suitable for the mass production of molded lenses having a small size and high optical performance. In addition, since the optical glass of the lens according to the above-mentioned aspect of the invention does not include environmental toxins, such as arsenic (As), lead (Pb) or tellurium (Te), it is preferable from an environmental protection viewpoint.

BRIEF DESCRIPTION OF THE DRAWINGS

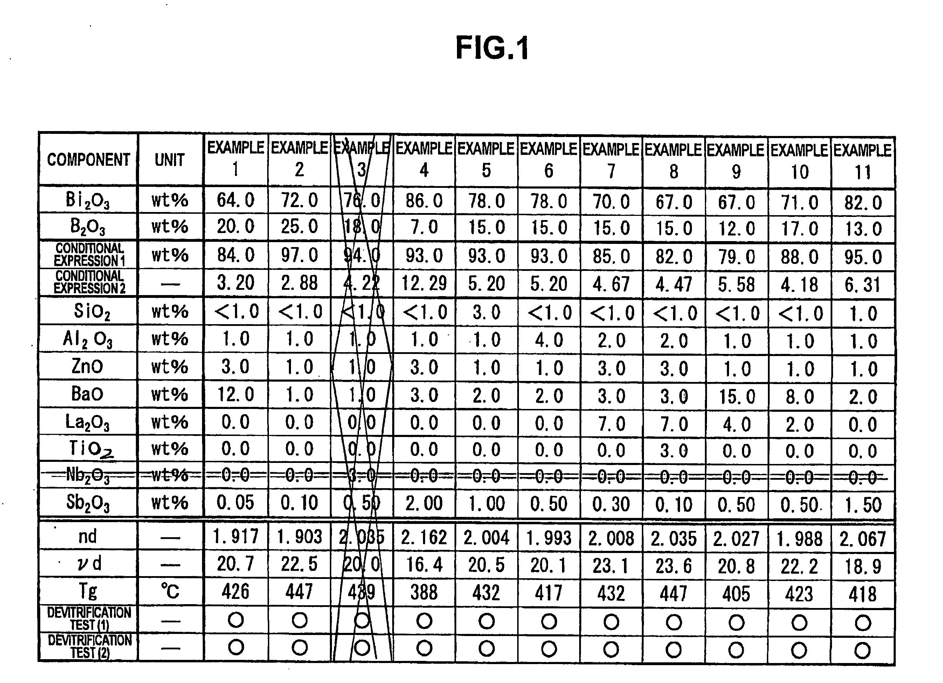

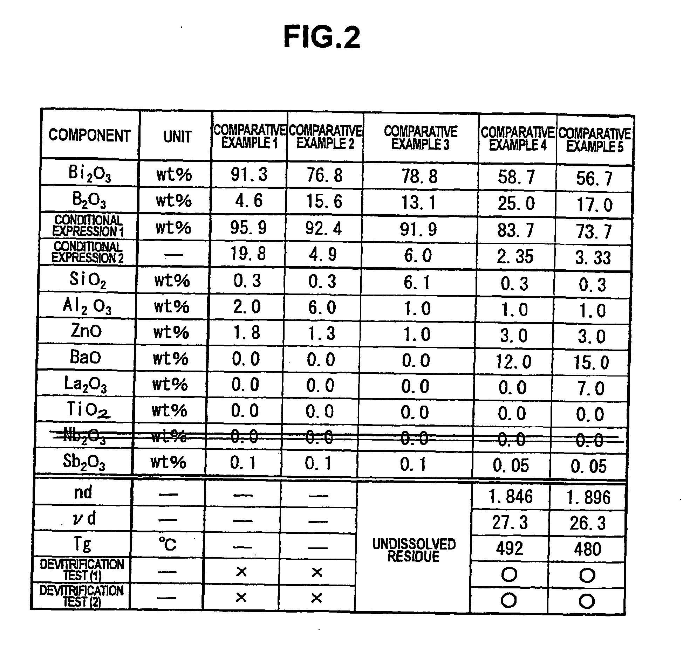

Fig. 1 is a diagram illustrating the components of the optical glasses of lenses according to examples of the invention, the contents thereof, and the various characteristic values thereof (Examples 1 to 11); and Fig. 2 is a diagram illustrating the components of the optical glasses of lenses according to comparative examples, the contents thereof, and the various characteristic values thereof (Comparative examples 1 to 5).

DESCRIPTION OF THE PREFERRED EMBODIMENTS

Hereinafter, exemplary embodiments of the invention will be described in detail.
Optical glass as described above is applicable for imaging lenses of the invention that are provided in, for example, digital still cameras, film cameras, or module cameras in mobile phones.
The optical glass consists of a bismuth oxide ($Bi_2O_3$), a boron oxide ($B_2O_3$), a silicon oxide ($SiO_2$), an aluminum oxide ($Al_2O_3$), a zinc oxide (ZnO) as components, in specific amounts each, and optionally at least one of BaO, $La_2O_3$, $TiO_2$, and $Sb_2O_3$, and satisfies the following Conditional expressions 1 and 2:

$$X+Y \geq 75 \ \dots\dots \ (1),$$

and

$$2.5 < X/Y < 13 \ \dots\dots \ (2)$$

where X indicates the content (%) of $Bi_2O_3$ and Y indicates the content (%) of $B_2O_3$.
In the invention, the content (%) of each component means 'wt%'.

$Bi_2O_3$ and $B_2O_3$ are the main components of the optical glass. When Conditional expression 1 is satisfied, it is possible to avoid crystallization and ensure high transparency. In addition, if the ratio is greater than the lower limit of Conditional expression 2, the refractive index nd of the optical glass with respect to the d-line is equal to or greater than 1.9. If the ratio is less than the upper limit of Conditional expression 2, it is easy to perform vitrification.
$Bi_2O_3$ is a component that is effective in increasing the refractive index of the optical glass and reducing the deformation temperature Ts (and a glass transition temperature Tg) thereof. If the content of $Bi_2O_3$ in the optical glass is equal to or greater than 60% and equal to or less than 90%, it is possible to obtain a high refractive index, a low deformation temperature (and a low glass transition temperature), and high devitrification resistance.
$B_2O_3$ is the framework material of the optical glass. If the content of $B_2O_3$ in the optical glass is equal to or greater than 5%, the structure of the optical glass is stabilized. If the content is equal to or less than 30%, it is easy to obtain a high refractive index.
$SiO_2$ prevents crystallization in the molding temperature range (the temperature range from the deformation temperature At of glass to a temperature that is about 50°C higher than the deformation temperature At). It is preferable that the content of $SiO_2$ be greater than 0 and equal to or less than 5%. That is, if there is any $SiO_2$ in the optical glass, the above-mentioned function of preventing crystallization can be exhibited. If the content of $SiO_2$ is equal to or less than 5%, the solubility of the optical glass is maintained at a high level.
$Al_2O_3$ increases the viscosity of the optical glass and delays the growth of crystal to improve devitrification resistance. If the content of $Al_2O_3$ in the optical glass is equal to or greater than 0.5% and equal to or less than 5%, it is possible to effectively obtain the above-mentioned function.
ZnO improves the solubility of the optical glass. The content of ZnO in the optical glass may be equal to or greater than 0.5% and equal to or less than 3%.
The optical glass may include at least one of a barium oxide (BaO), a lanthanum oxide ($La_2O_3$), a titanium oxide ($TiO_2$), and an antimony oxide ($Sb_2O_3$) as an arbitrary component.
BaO is appropriately added in order to obtain solubility or structural stability. BaO is obtained after barium carbonate ($BaCO_3$) or barium nitrate ($Ba(NO_3)_2$) added as a raw material in a manufacturing stage is decomposed during dissolution and is discharged as dissociated gas. The dissociated gas serves as a defoaming agent. The content of BaO in the optical glass may be equal to or less than 15%.
La203 reduces the dispersion of the optical glass (that is, increases the Abbe number). When an excessively large amount of La203 is added, devitrification is likely to occur during the manufacturing process.

Therefore, it is preferable that the content of La2O3 in the optical glass be equal to or less than 7%.

TiO2 is an effective component for ensuring a high refractive index of the optical glass, and the coexistence of TiO2 and Bi2O3 makes it possible to improve devitrification resistance during the manufacturing process. If the content of TiO2 in the optical glass is equal to or less than 5%, it is possible to obtain high solubility.

Sb2O3 has a defoaming function and a color removing function. The content of Sb2O3 may be equal to or greater than 0.03% and equal to or less than 2%.

For example, the optical glass can be manufactured as follows. Specifically, first, raw powders of the above-mentioned constituent materials are mixed at a predetermined mixture ratio to obtain a mixed raw material. Then, a predetermined amount of mixed raw material is introduced into a crucible that is heated at a predetermined temperature, and then sequentially melted while maintaining the temperature of the crucible (melting process). Then, the melted raw material is stirred for a predetermined time while maintaining the temperature of the crucible (stirring process). Then, a stationary state is maintained for a predetermined time to remove bubbles (fining process). Finally, the mixed raw material in the crucible flows out into a mold that is heated in advance at a predetermined temperature while being stirred with the temperature of the crucible maintained at a predetermined value, and is then cooled to obtain optical glass for a lens according to this embodiment.

The optical glass is used to form a lens as follows. First, the optical glass is processed into a desired size or shape according to the size or shape of an optical element to be formed, thereby forming a preform. Then, the preform is inserted into a mold that is precisely machined into a desired shape, and press molding is performed. In this case, both the mold and the preform are heated up to near the deformation temperature of the preform and then pressurized. Then, the temperature is reduced to a glass transition temperature or less while maintaining the pressurized state. Then, the formed lens is taken out from the mold and annealing is performed on the lens if necessary. In this way, the manufacture of the lens is completed.

As such, since the optical glass for the lens according to this embodiment includes a predetermined amount of each of the above-mentioned components, it is possible to reduce the deformation temperature (and the glass transition temperature) while ensuring a high refractive index. Specifically, for example, it is possible to reduce the glass transition temperature to 450°C or less while increasing the refractive index of the optical glass with respect to the d-line to 1.90 or more. In addition, even when press molding is performed at around the deformation temperature of glass, it is possible to easily avoid devitrification (so-called low-temperature devitrification). In addition, since the optical glass does not include the oxide of a monovalent alkali metal, such as sodium (Na), potassium (K), or lithium (Li), the structure of the optical glass is stabilized, and a poor appearance, such as cloudiness, is less likely to occur during molding. In addition, when $Sb_2O_3$ is added, it is possible to avoid coloring, which interferes with its practical use.

Therefore, the use of the optical glass makes it possible to effectively manufacture a molded lens according to the invention with good optical characteristics. In addition, it is possible to reduce the thermal load applied to the mold used for the press molding of the optical glass. Therefore, it is effective in increasing the life span of the mold. Further, since the optical glass does not include environmental toxins, such as arsenic (As), lead (Pb), or tellurium (Te), it is preferable from the environmental protection viewpoint.

[Examples]

Next, detailed examples of the optical glass according to the invention will be described.

Fig. 1 is a diagram illustrating components forming the optical glasses for lenses according to the invention. Fig. 1 shows examples of the invention and the content (wt%) of each of the components (Examples 1 to 11). In each of Examples 1 to 11, the content of $Bi_2O_3$ is equal to or greater than 60% and equal to or less than 90%, the content of $B_2O_3$ is equal to or greater than 5% and equal to or less than 30%, the content of $SiO_2$ is greater than 0 and equal to or less than 5%, and the content of $Al_2O_3$ is equal to or greater than 0.50 and equal to or less than 5%. Each of the content of $Bi_2O_3$ and the content of $B_2O_3$ satisfies Conditional expressions 1 and 2. In the optical glasses according to Examples 1 to 11, the content of ZnO is equal to or greater than 0.5% and equal to or less than 3%, the content of BaO is equal to or greater than 0% and equal to or less than 15%, and the content of $Sb_2O_3$ is equal to or greater than 0.03% and equal to or less than 2%. In the optical glasses according to Examples 7 to 10, the content of $La_2O_3$ is greater than 0 and equal to or less than 7%. In the optical glass according to Example 8, the content of $TiO_2$ is 3.0%. The values of the content of each of the components in the examples shown in Fig. 1 is represented by a numerical value calculated using the total weight percent of all components other than $Sb_2O_3$ as 100%.

Fig. 1 also shows various characteristic values of the optical glasses according to Examples 1 to 11. Specifically, Fig. 1 shows the refractive index nd of each of the optical glasses according to Examples 1 to 11 with respect to the d-line, the glass transition temperature Tg (°C) thereof, and whether the devitrification thereof occurs in a devitrification test (1) and a devitrification test (2). The devitrification tests (1) and (2) are performed as follows. Specifically, the optical glass from each of the examples is pulverized into glass particles, and the glass particles are left at a predetermined temperature (in the devitrification test (1), in the range of 800°C to 1000°C, and in the devitrification test (2), in the range of 450°C to 550°C) for 30 minutes, and then cooled to room temperature. Then, the cooled glass is observed through a polarization microscope to check whether cloudiness occurs or whether there are fine crystals.

As in Comparative examples 1 to 5, optical glass that did not satisfy at least one of Conditional expression 1 and Conditional expression 2 or an optical glass where the content of at least one of $SiO_2$ and $Al_2O_3$ was beyond the predetermined range was manufactured. Specifically, Comparative examples 1 and 4 did not satisfy Conditional expression 2. In Comparative example 2, the content of $Al_2O_3$ was excessively large. In Comparative example 3, the content of $SiO_2$ was excessively large. Comparative example 5 did not satisfy Conditional expression 1. Fig. 2 shows components and characteristic values of Comparative examples 1 to 5.

As can be seen from numerical data shown in Fig. 1, in Examples 1 to 11, it is possible to ensure a high refractive index nd of more than 1.90 and a glass transition temperature Tg of less than 450°C. In addition, devitrification does not occur. In Comparative examples 1 and 2, devitrification does occur. In Comparative example 3, since the content of $SiO_2$ is excessively large, the components are not sufficiently dissolved, and there is a residue that is not dissolved. In addition, in Comparative examples 4 and 5, devitrification does not occur, but the refractive index nd does not reach 1.9.

As can be seen from the results, the optical glass for the inventive lenses including the components according to the examples of the invention has a good balance between the refractive index nd and the glass transition temperature Tg, and devitrification is less likely to occur during the manufacturing process. Therefore, the optical glass is good for practical use. That is, the optical glasses for the inventive lenses having compositions according to the examples of the invention can be precisely formed by press molding at a relatively low temperature, and be applicable as constituent materials forming the lenses of the present invention, which have high optical performance.

Although the embodiment and the examples of the invention have been described above, the invention is not limited to the embodiment and the examples, but various modifications and changes of the invention can be made. For example, the components of the optical glass are not limited to the values shown in the above-mentioned examples, but they may have other values within the claimed ranges.

## Claims

1.  A lens formed from an optical glass consisting of:

    a bismuth oxide ($Bi_2O_3$);
    a boron oxide ($B_2O_3$);
    a silicon oxide ($SiO_2$);
    an aluminum oxide ($Al_2O_3$);
    a zinc oxide (ZnO);

and optionally at least one of a barium oxide (BaO), a lanthanum oxide ($La_2O_3$), a titanium oxide ($TiO_2$), and an antimony oxide ($Sb_2O_3$), wherein the optical glass satisfies the following conditional expressions 1 and 2:

$$X+Y \geq 75 \ \text{......} \ (1),$$

and

$$2.5 < X/Y < 13 \ \text{......} \ (2)$$

where X indicates the content (wt%) of the bismuth oxide and Y indicates the content (wt%) of the boron oxide,
and further wherein the content of the bismuth oxide is equal to or greater than 60 wt% and equal to or less than 90 wt%,
the content of the boron oxide is equal to or greater than 5 wt% and equal to or less than 30 wt%,
the content of the silicon oxide is greater than 0 and equal to or less than 5 wt%,
the content of the aluminum oxide is equal to or greater than 0.5 wt% and equal to or less than 5 wt%, and
the content of the zinc oxide is equal to or greater than 0.5 wt% and equal to or less than 3 wt%.

2.  The lens according to claim 1,
    wherein the content of the barium oxide is equal to or greater than 0 wt% and equal to or less than 15 wt%,
    the content of the lanthanum oxide is equal to or greater than 0 wt% and equal to or less than 7 wt%,
    the content of the titanium oxide is equal to or greater than 0 wt% and equal to or less than 5 wt%, and
    the content of the antimony oxide is equal to or greater than 0.03 wt% and equal to or less than 2 wt%.

## Patentansprüche

1.  Linse, die hergestellt ist aus einem optischen Glas, das besteht aus:

    einem Bismutoxid ($Bi_2O_3$);
    einem Boroxid ($B_2O_3$);
    einem Siliziumoxid ($SiO_2$);
    einem Aluminiumoxid ($Al_2O_3$);
    einem Zinkoxid (ZnO);
    und optional aus mindestens einem der Oxide Bariumoxid (BaO), Lanthanoxid ($La_2O_3$), Titanoxid ($TiO_2$), und Antimonoxid ($Sb_2O_3$).

wobei das optische Glas die folgenden Bedingungsausdrücke 1 und 2 erfüllt:

$$X + Y \geq 75 \dots (1),$$

und

$$2,5 < X/Y < 13 \dots (2)$$

worin X den Gehalt (Gew.%) an dem Bismutoxid angibt und Y den Gehalt (Gew.%) an dem Boroxid angibt,
und wobei außerdem der Gehalt an dem Bismutoxid gleich oder größer als 60 Gew.% und gleich oder kleiner als 90 Gew.% ist,
der Gehalt an dem Boroxid gleich oder größer als 5 Gew.% und gleich oder kleiner als 30 Gew.% ist,
der Gehalt an dem Siliziumoxid größer als 0 und gleich oder kleiner als 5 Gew.% ist,
der Gehalt an dem Aluminiumoxid gleich oder größer als 0,5 Gew.% und gleich oder kleiner als 5 Gew.% ist, und
der Gehalt an dem Zinkoxid gleich oder größer als 0,5 Gew.% und gleich oder kleiner als 3 Gew.% ist.

**2.** Linse nach Anspruch 1,
wobei der Gehalt an dem Bariumoxid gleich oder größer als 0 Gew.% und gleich oder kleiner als 15 Gew.% ist,
der Gehalt an dem Lanthanoxid gleich oder größer als 0 Gew.% und gleich oder kleiner als 7 Gew.% ist,
der Gehalt an dem Titanoxid gleich oder größer als 0 Gew.% und gleich oder kleiner als 5 Gew.% ist und
der Gehalt an dem Antimonoxid gleich oder größer als 0,03 Gew.% und gleich oder kleiner als 2 Gew.% ist.

**Revendications**

**1.** Lentille formée à partir d'un verre optique consistant en :

un oxyde de bismuth ($Bi_2O_3$) ;
un oxyde de bore ($B_2O_3$) ;
un oxyde de silicium ($SiO_2$) ;
un oxyde d'aluminium ($Al_2O_3$) ;
un oxyde de zinc (ZnO), et
en option, au moins un parmi un oxyde de baryum (BaO), un oxyde de lanthane ($La_2O_3$) ; un oxyde de titane ($TiO_2$), et un oxyde d'antimoine ($Sb_2O_3$),

dans laquelle le verre optique satisfait les expressions conditionnelles 1 et 2 suivantes :

$$X + Y \geq 75 \qquad \dots\dots \quad (1),$$

et

$$2,5 < X/Y < 13 \qquad \dots\dots \quad (2),$$

où
X indique la teneur (poids %) de l'oxyde de bismuth, et Y indique la teneur (poids %) de l'oxyde de bore),
dans laquelle en outre,
la teneur de l'oxyde de bismuth est supérieure ou égale à 60% en poids et inférieure ou égale à 90% en poids ;
la teneur de l'oxyde de bore est supérieure ou égale à 5% en poids et inférieure ou égale à 30% en poids ;
la teneur de l'oxyde de silicium est supérieure ou égale à 0 et inférieure ou égale à 5% en poids ;
la teneur de l'oxyde d'aluminium est supérieure ou égale à 0,5% en poids et inférieure ou égale à 5% en poids, et
la teneur de l'oxyde de zinc est supérieure ou égale à 0,5% en poids et inférieure ou égale à 3% en poids ;

**2.** Lentille selon la revendication 1, dans laquelle
la teneur de l'oxyde de bore est supérieure ou égale à 0% en poids et inférieure ou égale à 15% en poids ;
la teneur de l'oxyde de lanthane est supérieure ou égale à 0% en poids et inférieure ou égale à 7% en poids ;
la teneur de l'oxyde de titane est supérieure ou égale à 0% en poids et inférieure ou égale à 5% en poids, et
la teneur de l'oxyde d'antimoine est supérieure ou égale à 0,03% en poids et inférieure ou égale à 2% en poids.

# FIG.1

| COMPONENT | UNIT | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 |
|---|---|---|---|---|---|---|---|---|---|---|---|---|
| $Bi_2O_3$ | wt% | 64.0 | 72.0 | 76.0 | 86.0 | 78.0 | 78.0 | 70.0 | 67.0 | 67.0 | 71.0 | 82.0 |
| $B_2O_3$ | wt% | 20.0 | 25.0 | 18.0 | 7.0 | 15.0 | 15.0 | 15.0 | 15.0 | 12.0 | 17.0 | 13.0 |
| CONDITIONAL EXPRESSION 1 | wt% | 84.0 | 97.0 | 94.0 | 93.0 | 93.0 | 93.0 | 85.0 | 82.0 | 79.0 | 88.0 | 95.0 |
| CONDITIONAL EXPRESSION 2 | — | 3.20 | 2.88 | 4.22 | 12.29 | 5.20 | 5.20 | 4.67 | 4.47 | 5.58 | 4.18 | 6.31 |
| $SiO_2$ | wt% | <1.0 | <1.0 | <1.0 | <1.0 | 3.0 | <1.0 | <1.0 | <1.0 | <1.0 | <1.0 | 1.0 |
| $Al_2O_3$ | wt% | 1.0 | 1.0 | 1.0 | 1.0 | 1.0 | 4.0 | 2.0 | 2.0 | 1.0 | 1.0 | 1.0 |
| ZnO | wt% | 3.0 | 1.0 | 1.0 | 3.0 | 1.0 | 1.0 | 3.0 | 3.0 | 1.0 | 1.0 | 1.0 |
| BaO | wt% | 12.0 | 1.0 | 1.0 | 3.0 | 2.0 | 2.0 | 3.0 | 3.0 | 15.0 | 8.0 | 2.0 |
| $La_2O_3$ | wt% | 0.0 | 0.0 | 0.0 | 0.0 | 0.0 | 0.0 | 7.0 | 7.0 | 4.0 | 2.0 | 0.0 |
| $TiO_2$ | wt% | 0.0 | 0.0 | 0.0 | 0.0 | 0.0 | 0.0 | 0.0 | 3.0 | 0.0 | 0.0 | 0.0 |
| $Nb_2O_3$ | wt% | 0.0 | 0.0 | 3.0 | 0.0 | 0.0 | 0.0 | 0.0 | 0.0 | 0.0 | 0.0 | 0.0 |
| $Sb_2O_3$ | wt% | 0.05 | 0.10 | 0.50 | 2.00 | 1.00 | 0.50 | 0.30 | 0.10 | 0.50 | 0.50 | 1.50 |
| nd | — | 1.917 | 1.903 | 2.035 | 2.162 | 2.004 | 1.993 | 2.008 | 2.035 | 2.027 | 1.988 | 2.067 |
| $\nu d$ | — | 20.7 | 22.5 | 20.0 | 16.4 | 20.5 | 20.1 | 23.1 | 23.6 | 20.8 | 22.2 | 18.9 |
| Tg | ℃ | 426 | 447 | 439 | 388 | 432 | 417 | 432 | 447 | 405 | 423 | 418 |
| DEVITRIFICATION TEST (1) | — | O | O | O | O | O | O | O | O | O | O | O |
| DEVITRIFICATION TEST (2) | — | O | O | O | O | O | O | O | O | O | O | O |

# FIG.2

| COMPONENT | UNIT | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 |
|---|---|---|---|---|---|---|
| $Bi_2O_3$ | wt% | 91.3 | 76.8 | 78.8 | 58.7 | 56.7 |
| $B_2O_3$ | wt% | 4.6 | 15.6 | 13.1 | 25.0 | 17.0 |
| CONDITIONAL EXPRESSION 1 | wt% | 95.9 | 92.4 | 91.9 | 83.7 | 73.7 |
| CONDITIONAL EXPRESSION 2 | — | 19.8 | 4.9 | 6.0 | 2.35 | 3.33 |
| $SiO_2$ | wt% | 0.3 | 0.3 | 6.1 | 0.3 | 0.3 |
| $Al_2O_3$ | wt% | 2.0 | 6.0 | 1.0 | 1.0 | 1.0 |
| ZnO | wt% | 1.8 | 1.3 | 1.0 | 3.0 | 3.0 |
| BaO | wt% | 0.0 | 0.0 | 0.0 | 12.0 | 15.0 |
| $La_2O_3$ | wt% | 0.0 | 0.0 | 0.0 | 0.0 | 7.0 |
| $TiO_2$ | wt% | 0.0 | 0.0 | 0.0 | 0.0 | 0.0 |
| ~~$Nb_2O_3$~~ | ~~wt%~~ | ~~0.0~~ | ~~0.0~~ | ~~0.0~~ | ~~0.0~~ | ~~0.0~~ |
| $Sb_2O_3$ | wt% | 0.1 | 0.1 | 0.1 | 0.05 | 0.05 |
| nd | — | — | — | UNDISSOLVED RESIDUE | 1.846 | 1.896 |
| $\nu$ d | — | — | — | | 27.3 | 26.3 |
| Tg | °C | — | — | | 492 | 480 |
| DEVITRIFICATION TEST (1) | — | × | × | | ◯ | ◯ |
| DEVITRIFICATION TEST (2) | — | × | × | | ◯ | ◯ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006151758 A
- JP 2007099610 A
- JP 2007070156 A